# EUROPEAN PATENT SPECIFICATION

(11) **EP 2 752 372 B1**
(45) Date of publication and mention of the grant of the patent: **03.06.2015**
(21) Application number: 14163614.2
(22) Date of filing: 13.08.2004
(51) Int. Cl.: B65D 81/00

(54) **Beverage filter cartridge**
Getränkefilterpatrone
Cartouche filtre de boisson

(30) Priority: 10.09.2003 US 658925
(43) Date of publication of application: 09.07.2014
(62) Divisional of application: 04781030.4
(73) Proprietor: Keurig Green Mountain, Inc., Waterbury, VT 05676 (US)
(72) Inventor: Karanikos, Basil, North Andover, MA 01845 (US); Rossi, Frederick, Burlington, MA Massachusetts 01803 (US)
(74) Representative: Barker, Rosemary Anne

(56) References cited:
- CH-A5- 688 686
- US-A- 5 298 267
- US-A- 5 840 189

## Description

### BACKGROUND OF THE INVENTION

### 1. Field of the Invention

This invention relates generally to single serve beverage brewing systems, and is concerned in particular with an improved filter cartridge for use in such systems.

### 2. Description of the Prior Art

In a known beverage filter cartridge of the type disclosed in U.S. Patent Nos. 5,325,765 and 5,840,189, the cone-shaped filter element has a somewhat limited storage capacity for the beverage medium. Moreover, the configuration of the filter element encourages rapid liquid penetration to and through the lower end, resulting in less than optimum saturation of the beverage medium at upper regions of the filter element adjacent to the container wall. The combined effect of limited storage capacity and less than optimum saturation is a lowering of the total dissolved solids ("TDS") in the brewed beverage, which translated into reduced flavor.

In an attempt at increasing the TDS of the resulting brew, and as shown in copending commonly owned U.S. Patent Application Serial No. 09/782,622, beverage medium storage capacity was increased by lowering the level of attachment of the filter element to a reconfigured outer container wall. Although this did indeed increase the amount of beverage medium available for brewing, it did so at a cost of also increasing the amount of beverage medium receiving less that optimum saturation, with the net affect being an insignificant increase in TDS of the brewed beverage.

The present invention is directed to overcoming the drawbacks of the prior art by providing an improved combination of cartridge container and internal filter that achieves both increased storage capacity for the beverage medium, and optimized saturation, resulting in significantly increase TDS levels in the resulting brewed beverage.

### SUMMARY OF THE INVENTION

A beverage filter cartridge in accordance with the invention is as specified in claim 1.

In a preferred embodiment of the present invention, a beverage filter cartridge has an impermeable cup-shaped container with a bottom and a side wall diverging upwardly to a collar surrounding a top opening. A filter element has a substantially flat bottom and a side wall diverging upwardly to an upper rim. The said filter element is received in the container with its bottom spaced both inwardly from the container side wall and vertically from the container bottom, and with its upper rim joined at a peripheral juncture to the interior of the container side wall. The interior of the container is thus subdivided by the filter element into a first chamber accessible via the top container opening, and a second chamber disposed between the vertically spaced filter and container bottoms. The filter side wall has exterior channels that face the interior of the container side wall and that lead from the aforesaid peripheral juncture to the second chamber. A beverage medium is received in the first chamber via the container top opening, and an impermeable cover is sealed to the container collar. The cover is piercable to admit liquid into the first chamber for infusion with the beverage medium to produce a beverage, the filter element is permeable to accommodate a flow therethrough of the beverage for delivery via the exterior filter channels to the second chamber, and the container bottom is piercable to accommodate an outflow of the beverage from the cartridge. These and other features and advantages of the present invention will now be described in greater detail with reference to the accompanying drawings, wherein:

### BRIEF DESCRIPTION OF THE DRAWINGS

Figure 1 is a vertical sectional view taken through a beverage filter cartridge in accordance with one embodiment of the present invention;
Figure 2 is an exploded perspective view of the components of the filter cartridge;
Figure 3 is a top plan view of the filter element;
Figure 4 is a sectional view taken along line 4-4 of Figure 1;
Figure 5 is a perspective view of an alternative embodiment of a filter element;
Figure 6 is a sectional view of the filter element shown in Figure 5;
Figure 7 is a top plan view of the filter element shown in Figure 5;
Figure 8 is a view similar to Figure 1 showing the outer container pierced by inlet and outlet probes during a brewing cycle; and
Figure 9 is another view similar to Figure 1 showing a double-walled filter element.

### DETAILED DESCRIPTION OF PREFERRED EMBODIMENTS

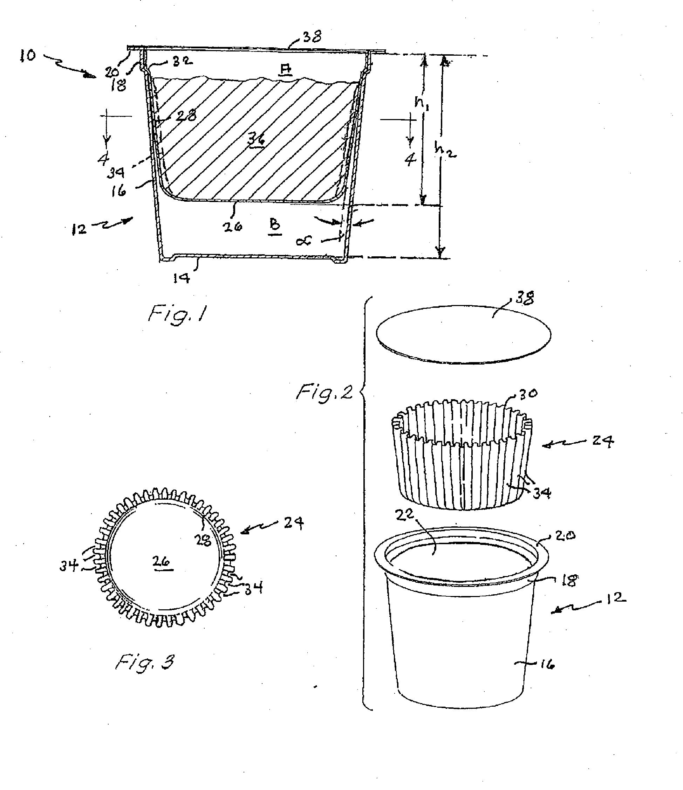

With reference initially to Figures 1-4, a beverage filter cartridge in accordance with one embodiment of the present invention is shown at 10. The cartridge includes an impermeable cup-shaped container 12 having a first bottom wall 14 and a first side wall 16 diverging upwardly to a collar 18 having a peripheral lip 20 surrounding a top opening 22.

As herein employed, the term "impermeable" means substantially resistant to the passage therethrough of liquids and gases. The container 12 may be formed of any one of many commercially available materials, e.g., polystyrene, polyethylene, polypropylene, laminated composites thereof, etc. A filter element 24 has a substantially flat second bottom 26 and a second side wall 28 diverging upwardly to an upper rim 30. The filter element is permeable to liquids, and again may be formed from commercially available materials, e.g., paper or polymer materials. The filter element 24 is received in the container 12 with its bottom 26 spaced both inwardly from the container side wall 16 and vertically from the container bottom wall 14. The upper rim 30 of the filter is joined, as by heat sealing at a peripheral juncture 32, to the interior of the container side wall 16 in the vicinity of collar 18. When thus positioned, the filter element subdivides the interior of the container into a first chamber A accessible via the top opening 22 of the container, and a second chamber B disposed between the filter and container bottoms 26, 14.

The filter side wall 28 is configured to provide exterior channels indicated typically at 34 that face the interior of the container side wall 16 and that lead downwardly from the peripheral juncture 32 to the second chamber B. Preferably, the filter wall 28 is disposed at an angle of less than about 1° with respect to the container wall 16, with angles of between about 0.5 to 0.9° being preferable.

A beverage medium 36 is received in the first chamber A via the container top opening 22 and an impermeable cover 38 is joined as by heat sealing to the peripheral lip 20 of the container side wall 16.

The cover may be formed of a plastic, metallic foil, or any laminated composite thereof. In accordance with conventional practice, oxygen may be purged from the container interior by the introduction of an inert gas, e.g., nitrogen, prior to sealing the cover in place.

The height h₁ of the first chamber A is between about 75 to 80% of the height h₂ of the cartridge interior. This, combined with the substantially flat filter bottom 26, maximizes the storage capacity for the beverage medium 36.

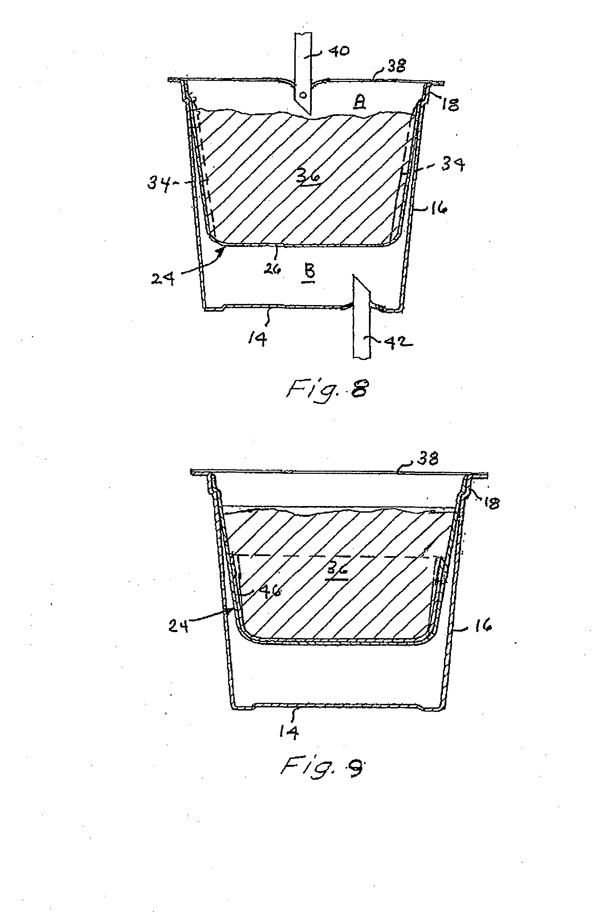

As shown in Figure 8, during a brewing cycle, the cover 38 is pierced by a tubular inlet probe 40 to admit heated liquid into chamber A for infusion with the beverage medium to produce a liquid beverage. The permeability of the filter element 24 accommodates a flow therethrough of the beverage into the second chamber B. The channels 34 provide critical exit passageways for the beverage permeating through the filter side wall and in so doing encourage full saturation of the beverage medium in areas adjacent to the container side wall.

The container bottom 14 is pierced by a tubular outlet probe 42 to accommodate an outflow of the beverage from the cartridge. The vertical spacing of the filter bottom 26 from the container bottom 14 insures that the filter will be safeguarded from inadvertent puncture by the outlet probe 42.

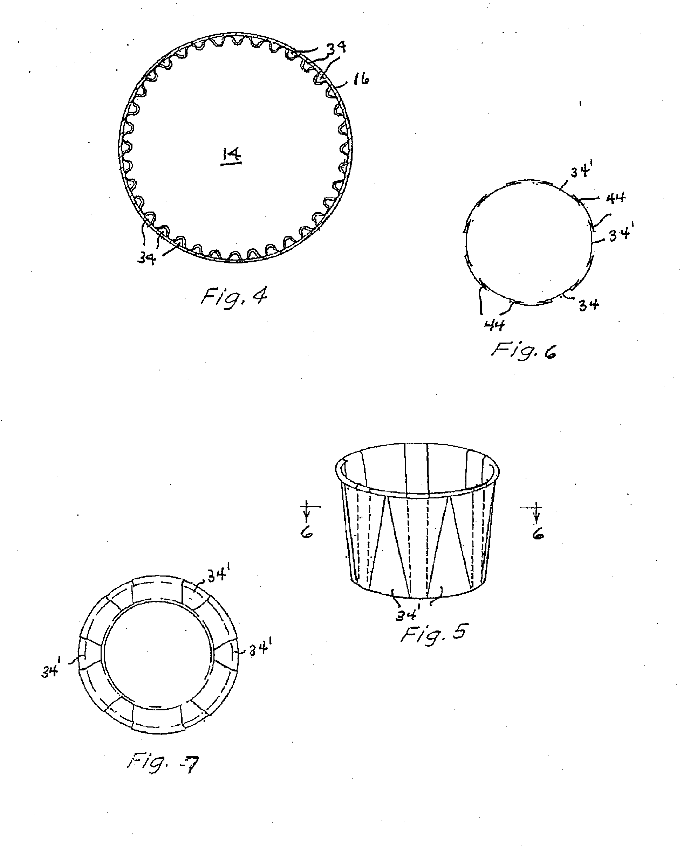

The channels 34 may be provided by forming the filter side wall with a fluted configuration as shown in Figures 1-4. Alternatively, as shown for example in Figures 5-7, channels 34' may be formed by pleats 44 in the filter side wall. When thus formed, the channels increase in width from a minimum at the upper rim of the filter to a maximum at the filter bottom.

Infusion of the beverage medium in the upper regions of the filter element may be further enhanced by decreasing the permeability of lower regions of the filter element. As shown in Figure 9, this can be accomplished, for example, by providing the filter element with a complimentary shaped insert 46 of the same or like filter material. This will retard permeation of the beverage in the lower filter regions in favor of enhanced permeation in the upper regions adjacent to the container side wall.

Although the preceding description has been directed to a specific embodiment of the invention, it will be apparent to those skilled in the art that variations and modifications can be made within the scope of the appended claims.

The invention may be summarised as a beverage filter cartridge comprising:
a cup-shaped outer container having a side wall and a bottom; and
a cup-shaped filter element having a side wall and a bottom said filter element being arranged to subdivide the interior of said container into a first chamber inside said filter element and a second chamber located between the bottom of said filter element and the bottom of said container, said filter element having an upper rim joined to the container side wall at a peripheral juncture, and said filter side wall having exterior channels that face said container side wall and that lead downwardly from said peripheral juncture to said second chamber.

## Claims

1. A single serve beverage filter cartridge (10) comprising:
an impermeable cup-shaped outer container (12) having a side wall (16) and a bottom (14);
a permeable cup-shaped filter element (24) of paper or polymer materials having a side wall (28) and a bottom (26), said filter element being arranged to subdivide the interior of said container (12) into a first chamber (A) inside said filter element (24) and a second chamber (B) located between said filter element (24) and said container (12), the bottom (26) of the filter element (24) being spaced vertically from the container bottom (14) so that the second chamber (B) is located between the bottom (26) of said filter element (24) and the bottom of said container, said filter element also having an upper rim joined to the container side wall (16) at a peripheral juncture (32);
a beverage medium disposed in said first chamber (A); and
an impermeable cover (38) joined to said container side wall (16) to close a top opening of said outer container (12), said cover (38) being piercable to admit liquid into said first chamber (A) for contact with said beverage medium to produce a beverage, and said container bottom (14) being piercable to accommodate an outflow of beverage from the cartridge;
**characterised in that** said filter element side wall (28) has flutes or pleats (44) defining exterior channels (34) that face said container side wall (16) and lead downwardly from said peripheral juncture (32) to said second chamber (B) and that coact with the interior of said container side wall (16) to define exit passageways for beverage permeating through said filter side wall thereby encouraging saturation of the beverage medium in areas adjacent to said container side wall.

2. A beverage filter cartridge according to claim 1 wherein said filter element side wall (28) extends downwardly from said peripheral juncture (32) and away from said container side wall (16) at an angle of less than 1°.

3. A beverage filter cartridge according to claim 2 wherein said angle is between 0.5° and 0.9°.

4. A beverage filter cartridge according to any preceding claim wherein said channels (34) increase in width from a minimum adjacent said peripheral juncture (32) to a maximum adjacent said filter bottom (26).

5. A beverage filter cartridge according to any preceding claim wherein the permeability of a lower region of said filter element (24) is reduced in comparison to the permeability of an upper region thereof.

6. A beverage filter cartridge according to claim 5 wherein said reduced permeability is achieved by increasing the thickness of said filter element (24) in said lower region.

7. A beverage filter cartridge according to claim 6 wherein said increased thickness is achieved by lining the lower region of said filter element (24) with a cup shaped insert (46) of the same or like filter material.

## Patentansprüche

1. Einweggetränkefilterpatrone (10) umfassend:
einen undurchdringbaren becherförmigen äußeren Behälter (12) mit einer Seitenwand (16) und einem Boden (14);
ein durchdringbares becherförmiges Filterelement (24) aus Papier oder Polymermaterialien mit einer Seitenwand (28) und einem Boden (26), wobei das Filterelement angeordnet ist, um das Innere des Behälters (12) in eine erste Kammer (A) innerhalb des Filterelementes (24) und eine zwischen dem Filterelement (24) und dem Behälter (12) angeordnete zweite Kammer (B) zu unterteilen, wobei der Boden (26) des Filterelements (24) von dem Behälterboden (14) vertikal beabstandet angeordnet ist, so dass die zweite Kammer (B) zwischen dem Boden (26) des Filterelements (24) und dem Boden des Behälters angeordnet ist, wobei das Filterelement auch einen oberen Rand aufweist, der mit der Behälterseitenwand (16) an einer umlaufenden Verbindung (32) verbunden ist;
ein Getränkemedium, das in der ersten Kammer (A) angeordnet ist; und
eine undurchdringbare Abdeckung (38), die mit der Behälterseitenwand (16) verbunden ist, um eine obere Öffnung des äußeren Behälters (12) zu verschließen, wobei die Abdeckung (38) durchstechbar ist, um eine Flüssigkeit in die erste Kammer (A) füllen zu können, um mit dem Getränkemedium in Kontakt zu gelangen, um ein Getränk zu erzeugen, und wobei der Behälterboden (14) durchstechbar ist, um ein Auslaufen des Getränks aus der Patrone zu ermöglichen;
**dadurch gekennzeichnet, dass** die Filterelementseitenwand (28) Auskehlungen oder Furchen (44) aufweist, die Außenkanäle (34) definieren, die der Behälterseitenwand (16) zugewandt sind und von der umlaufenden Verbindung (32) nach unten zu der zweiten Kammer (B) führen und die mit dem Inneren der Behälterseitenwand (16) zusammen wirken, um Ausgangsdurchlässe für das Getränk zu definieren, die die Filterseitenwand durchdringen, wodurch eine Sättigung des Getränkemediums in an die Behälterseitenwand angrenzenden Bereichen gefördert ist.

2. Getränkefilterpatrone nach Anspruch 1, wobei die Filterelementseitenwand (28) sich von der umlaufenden Verbindung (32) nach unten erstreckt und sich von der Behälterseitenwand (16) mit einem Winkel von weniger als 1 °weg erstreckt.

3. Getränkefilterpatrone nach Anspruch 2, wobei der Winkel zwischen 0,5° und 0,9° liegt.

4. Getränkefilterpatrone nach einem der vorangehenden Ansprüche, wobei sich die Kanäle (34) von einem benachbart zu der umlaufenden Verbindung (32) angeordneten Minimum zu einem benachbart zu dem Filterboden (26) angeordneten Maximum verbreitern.

5. Getränkefilterpatrone nach einem der vorangehenden Ansprüche, wobei die Durchlässigkeit des unteren Bereichs des Filterelements (24) geringer als die Durchlässigkeit von dessen oberen Bereich ist.

6. Getränkefilterpatrone nach Anspruch 5, wobei die geringere Durchlässigkeit durch Vergrößern der Dicke des Filterelements (24) in dem unteren Bereich erzielt ist.

7. Getränkefilterpatrone nach Anspruch 6, wobei die vergrößerte Dicke durch Ausfüttern des unteren Bereichs des Filterelements (24) mit einem becherförmigen Einsatz (46) aus demselben Filtermaterial erzielt ist.

## Revendications

1. Cartouche filtre pour boisson à usage unique (10) comprenant :
un récipient externe en forme de coupelle imperméable (12) ayant une paroi latérale (16) et un fond (14) ;
un élément de filtre en forme de coupelle perméable (24) réalisé à partir de papier ou de matériaux polymères ayant une paroi latérale (28) et un fond (26), ledit élément de filtre étant agencé pour diviser l'intérieur dudit récipient (12) en une première chambre (A) à l'intérieur dudit élément de filtre (24) et en une seconde chambre (B) positionnée entre ledit élément de filtre (24) et ledit récipient (12), le fond (26) de l'élément de filtre (24) étant verticalement espacé du fond (14) du récipient de sorte que la seconde chambre (B) est positionnée entre le fond (26) dudit élément de filtre (24) et le fond dudit récipient, ledit élément de filtre ayant également un rebord supérieur assemblé à la paroi latérale (16) de récipient au niveau d'une jonction périphérique (32) ;
un agent de boisson disposé dans ladite première chambre (A) ; et
un couvercle imperméable (38) assemblé à ladite paroi latérale (16) du récipient pour fermer l'ouverture supérieure dudit récipient externe (12), ledit couvercle (38) pouvant être percé pour admettre du liquide dans ladite première chambre (A) pour le contact avec ledit agent de boisson afin de produire une boisson, et ledit fond (14) du récipient pouvant être percé pour accepter un écoulement sortant de boisson à partir de la cartouche ;
**caractérisée en ce que** la paroi latérale (28) d'élément de filtre a des cannelures ou des plis (44) définissant des canaux extérieurs (34) qui font face à ladite paroi latérale (16) du récipient et descendent à partir de ladite jonction périphérique (32) jusqu'à ladite seconde chambre (B) et qui co-agissent avec l'intérieur de ladite paroi latérale (16) du récipient afin de définir des voies de passage de sortie pour la boisson qui s'infiltre à travers ladite paroi latérale de filtre, favorisant ainsi la saturation de l'agent de boisson dans les zones adjacentes à ladite paroi latérale du récipient.

2. Cartouche filtre pour boisson selon la revendication 1, dans laquelle ladite paroi latérale (28) d'élément de filtre s'étend vers le bas à partir de ladite jonction périphérique (32) et à distance de ladite paroi latérale (16) du récipient selon un angle inférieur à 1 °.

3. Cartouche filtre pour boisson selon la revendication 2, dans laquelle ledit angle est compris entre 0,5° et 0,9 °.

4. Cartouche filtre pour boisson selon l'une quelconque des revendications précédentes, dans laquelle lesdits canaux (34) augmentent en largeur à partir d'un minimum adjacent à ladite jonction périphérique (32) jusqu'à un maximum adjacent audit fond de filtre (26).

5. Cartouche filtre pour boisson selon l'une quelconque des revendications précédentes, dans laquelle la perméabilité d'une région inférieure dudit élément de filtre (24) est réduite par rapport à la perméabilité de sa région supérieure.

6. Cartouche filtre pour boisson selon la revendication 5, dans laquelle ladite perméabilité réduite est obtenue en augmentant l'épaisseur dudit élément de filtre (24) dans ladite région inférieure.

7. Cartouche filtre pour boisson selon la revendication 6, dans laquelle ladite épaisseur augmentée est obtenue en recouvrant la région inférieure dudit élément de filtre (24) avec un insert en forme de coupelle (46) réalisé avec le même matériau de filtre ou un matériau similaire.
